# EUROPÄISCHE PATENTSCHRIFT

(11) **EP 1 634 784 B1**
(45) Veröffentlichungstag und Bekanntmachung des Hinweises auf die Patenterteilung: **07.05.2008**
(21) Anmeldenummer: 05019498.4
(22) Anmeldetag: 07.09.2005
(51) Int. Cl.: B60S 9/215, B62D 49/02

(54) **Selbstfahrende Arbeitsmaschine mit Stützelement**
Self propelled working machine with support element
Machine de travaille automobile avec élément de support

(30) Priorität: 10.09.2004 DE 202004014082 U
(43) Veröffentlichungstag der Anmeldung: 15.03.2006
(73) Patentinhaber: Lösche, Andreas, 32351 Stemwede (DE)
(72) Erfinder: Lösche, Andreas, 32351 Stemwede (DE)
(74) Vertreter: Engelmann, Kristiana

(56) Entgegenhaltungen:
- EP-A- 1 031 483
- DE-U1- 8 700 401
- GB-A- 2 149 734
- GB-A- 2 328 415

## Beschreibung

Die vorliegende Erfindung bezieht sich auf eine selbstfahrende Arbeitsmaschine nach dem Oberbegriff des Anspruchs 1, sowie auf ein Stützelement zum stirnseitigen Anbau an eine selbstfahrende Arbeitsmaschine.

Eine solche Arbeitsmaschine wird in der EP 1 031 483 beschrieben.

Selbstfahrende Arbeitsmaschinen, wie Baumaschinen, Landmaschinen, Traktoren und dergleichen, müssen so gebaut sein, daß sie auf einer sehr geringen Grundfläche wenden können. Auf Baustellen oder auf Vorgewenden von Feldern ist nur wenig Platz zur Verfügung, um Wendevorgänge durchführen zu können. Zudem sind die Fahrzeiten, die für Wendevorgänge aufgewendet werden müssen, im Regelfall Zeitverluste, in denen die selbstfahrende Arbeitsmaschine nicht bestimmungsgemäß für Arbeitsvorgänge genutzt werden kann. Deshalb ist es insbesondere auch aus Wirtschaftlichkeitsgründen erstrebenswert, Wendevorgänge möglichst effizient durchführen zu können.

Aus dem Stand der Technik sind eine Vielzahl von technischen Lösungen bekannt, um den maximal möglichen Lenkeinschlagswinkel an der Lenkachse zu vergrößern, um durch Drehzahldifferenzen an angetriebenen Rädern einen zusätzlichen Lenkimpuls zu erzeugen oder, wie in der Schrift DE 44 42 488 A1 beschrieben, die Position der Achsen zu verschieben, um für Lenkbewegungen einen kürzeren Achsabstand zu erzielen. Alle diese Maßnahmen bringen zwar graduelle Verbesserungen in der Lenkbarkeit der Fahrzeuge, besonders enge Wenderadien lassen sich mit den Techniken jedoch nicht oder nur mit erheblichem zusätzlichem Aufwand erzielen.

Weitere Beispiele für Lenkvorrichtungen finden sich in den Schriften EP 1 031 483, DE 87 00 401, GB-A-2 149 734 und GB-A-2 328 415.

Es ist die Aufgabe der vorliegenden Erfindung, eine Vorrichtung zu schaffen, durch die das Lenkverhalten von selbstfahrenden Arbeitsmaschinen der gattungsgemäßen Art verbessert werden kann.

Die Aufgabe wird für eine gattungsgemäße selbstfahrende Arbeitsmaschine anhand einer Vorrichtung mit den kennzeichnenden Merkmalen des Anspruchs 1 gelöst.

Für eine Abwandlung der erfindungsgemäßen Idee ist die Aufgabenstellung darin zu sehen, das für sich bekannte Stützelement so abzuwandeln, daß es zur Unterstützung der Lenkfunktionen einer selbstfahrenden Arbeitsmaschine nutzbar ist.

Die Aufgabe wird für ein gattungsgemäßes Stützelement durch die kennzeichnenden Merkmale des Anspruchs 9 gelöst.

Durch das erfindungsgemäße Stützelement wird der erzielbare Wenderadius der selbstfahrenden Arbeitsmaschine nicht mehr durch den maximal möglichen Einschlagswinkel der gelenkten Räder begrenzt. Durch die Verstellung des Stützelementes nach unten werden zwei Räder abgehoben, und die Fahrtrichtung der Arbeitsmaschine kann durch den Einschlagswinkel des Stützelementes vorgegeben werden. Durch die schwenkbewegliche Lagerung des Stützelementes um eine Hochachse herum können mit geringen Stellbewegungen sehr hohe Lenkwinkeleinschläge für das Stützelement vorgegeben werden, wie beispielsweise ein Einschlagswinkel von bis zu 90 Grad in eine Richtung.

Um zu vermeiden, daß bei derartig extremen Einschlagswinkeln die Vorwärtsfahrbewegung des Fahrzeuges blockiert ist, wird vorgeschlagen, das Stützelement in eine Fahrtrichtung antreibbar auszubilden. Da die einstellbaren extremen Lenkwinkel im Normalfall nur bei geringen Fahrgeschwindigkeiten vorgewählt werden, genügt es, den Antrieb des Stützelementes ebenfalls nur auf geringe Fahrgeschwindigkeiten auszulegen. Die niedrigen Drehgeschwindigkeiten im Antrieb des Stützelementes weisen den Vorteil auf, daß der Antrieb auf die Übertragung von hohen Drehmomenten ausgelegt werden kann, was gerade bei Fahrbewegungen im Gelände und auf schweren Böden oder unter Last einen erheblichen Vorteil bewirken kann.

Das Stützelement kann so ausgebildet sein, daß es sich über mehr als die Hälfte der Breite des Fahrzeuges erstreckt. Bei einem solchen breiten Stützelement ergibt sich eine vergleichsweise große Bodenaufstandsfläche, über die auch bei schwierigen Bodenverhältnissen hohe Zugkräfte mühelos übertragen werden können.

Bei hohen Lenkeinschlagswinkeln wird die selbstfahrende Arbeitsmaschine gegen ein seitliches Umkippen gesichert, indem die ausgehobenen Räder bei Kippbewegungen wieder einen Bodenkontakt bekommen und dadurch eine Kippbewegung zu stoppen und die Arbeitsmaschine abzustützen vermögen.

Nach einer vorteilhaften Ausgestaltung der Erfindung wird das Stützelement an der vorderen Stirnseite der selbstfahrenden Arbeitsmaschine angebracht. Dadurch bleibt der häufig für Arbeitsgeräte genutzte Heckbereich der selbstfahrenden Arbeitsmaschine frei, die hintere Antreibsachse kann auch bei einem aktivierten Stützelement Antriebskräfte auf den Boden übertragen, und nur die Lenkräder werden durch die Aktivstellung des Stützelementes ausgehoben, die jedoch wegen der Aktivierung des Stützelementes für Lenkfunktionen nicht mehr benötigt werden. Durch das Ausheben der Lenkräder kann es auch nicht mehr zu Wirkungskonflikten zwischen dem bei den Lenkrädern und dem Stützelement eingeschlagenen Lenkwinkeln kommen, wenn diese voneinander abweichen sollten.

Ein Vorteil der vorgeschlagenen Lösung ist auch darin zu sehen, daß das zusätzliche Stützelement als Gegengewicht für ein an der gegenüberliegenden Stirnseite der Arbeitsmaschine angebrachtes Arbeitswerkzeug fungieren kann. Durch den stirnseitigen Anbau ist das Stützelement besonders weit vom Schwerpunkt der Arbeitsmaschine entfernt, so daß sich aus dieser Anbringungsposition ein erheblicher Hebeleffekt ergibt.

Durch das erfindungsgemäße Stützelement ist es möglich, eine selbstfahrende Arbeitsmaschine mit einem sehr geringen Wenderadius zu versehen und diese mehr oder weniger auf einer Stelle zu wenden. Die Manövrierfähigkeit der Arbeitsmaschine ist dadurch deutlich erhöht, und bei Arbeitsmaschinen, die häufiger gewendet werden müssen, wie beispielsweise Traktoren am Vorgewende, ergibt sich eine erhebliche Effizienzsteigerung der Maschine durch kürzere Wendezeiten. Insbesondere kann durch das erfindungsgemäße Stützelement auf Rangiervorgänge verzichtet werden, da die Arbeitsmaschine in einem Schwung mit einem geringen Wenderadius um 180 Grad gedreht werden kann.

Der Vorgang der Aktivierung des Stützelementes, die Einstellung eines Lenkwinkels für das Stützelement und das Einschalten des Antriebes für das Stützelement können in geeigneter Weise automatisiert werden. So kann das Stützelement für einen Wendevorgang mit einer Programmautomatik durch die Betätigung eines Startknopfes aktiviert werden, ohne daß der Fahrer der Arbeitsmaschine dafür weitere Bedienvorgänge ausführen müßte. Der Fahrer drückt also bei Erreichen der Wendeposition auf den Startknopf der Automatik und braucht sich danach um nichts mehr zu kümmern, da die Automatik entsprechenden Einstellungs- und Steuerungsvorgängen selbsttätig ausführt.

Die Stützvorrichtung ist nicht nur für reine Wendevorgänge einsetzbar, sondern kann auch zur Unterstützung der normalen Fahrzeuglenkung genutzt werden. Ein Anwendungsfall für eine Unterstützung der herkömmlichen Fahrzeuglenkung ist beispielsweise die Nutzung der Arbeitsmaschine am Hang, wenn die Hangabtrift durch einen ständigen Lenkeinschlag der normalen Lenkung ausgeglichen werden müßte. In diesem Fall kann das Stützelement in einer solchen Höhe eingestellt werden, daß sowohl das Stützelement wie auch die gelenkten Räder der Arbeitsmaschine in der Lage sind, Lenkkräfte auf den Boden zu übertragen. Durch die größere Aufstandsfläche aus dem zugeschalteten Stützelement können größere Lenkkräfte auf den Boden übertragen werden, wobei dieses auch bodenschonender erfolgt, da die Erde mit dem Stützelement bei größeren Lenkkräften nicht so stark aufgegraben wird wie bei einer alleinigen Verwendung der gelenkten Räder zur Übertragung von gößeren Lenkkräften.

Weitere Verbesserungen und bevorzugte Ausgestaltungen der Erfindung lassen sich der nachfolgenden gegenständlichen Beschreibung, den Zeichnungen und den Merkmalen der Unteransprüche entnehmen.

Die Erfindung soll nun anhand eines Ausführungsbeispieles näher erläutert werden; es zeigen:
- Fig. 1:: Eine Arbeitsmaschine mit Stützelement aus einer Ansicht von oben,
- Fig. 2:: Eine seitliche Ansicht entlang der Linie B-B in Fig. 1 und
- Fig. 3:: Eine Ansicht entlang der Linie C-C in Fig. 1.

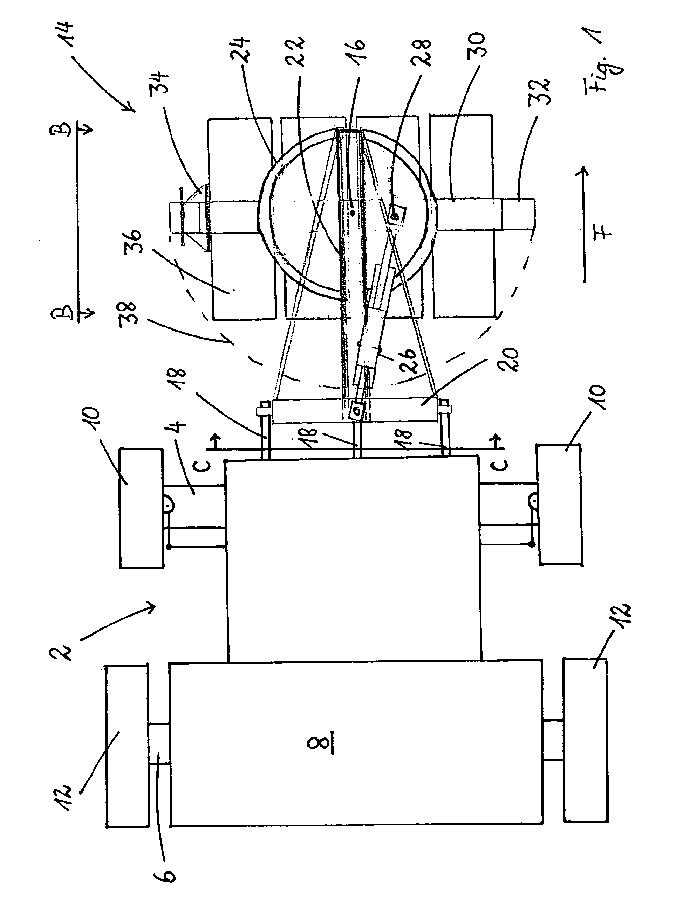

In Fig. 1 ist die Arbeitsmaschine 2 aus einer Ansicht von oben zu sehen. Die Arbeitsmaschine 2 kann ein Traktor, aber auch eine Baumaschine, Landmaschine und dergleichen sein. Die Arbeitsmaschine 2 verfügt über eine Vorderachse 4 und eine Hinterachse 6. Die Arbeitsmaschine 2 wird von der Kabine 8 aus gesteuert. Im Ausführungsbeispiel sind die Vorderräder 10 lenkbar und die Hinterräder 12 nicht lenkbar. Davon abweichend können jedoch auch die Räder der Vorder- und Hinterachse lenkbar sein, oder es ist nur die Hinterachse lenkbar.

An der vorderen Stirnseite der Arbeitsmaschine 2 ist das Stützelement 14 angebracht. Im Ausführungsbeispiel besteht das Stützelement 14 aus einer Packerwalze, die aus mehreren auf einer gemeinsamen Achse angeordneten Rädern gebildet ist. Packerwalzen sind handelsüblich erhältlich, um bei der landwirtschaftlichen Bodenbearbeitung an Traktoren angebaut den Boden zu vergleichmäßigen. Das Stützelement 14 kann jedoch auch aus anderen Elementen gebildet sein, wie beispielsweise einem metallischen Hohlzylinder ohne oder mit einer äußeren Gummibeschichtung, Raupenelementen, einem oder mehreren besonders breiten Terra-Reifen oder ähnlichem bestehen.

Das Stützelement 14 ist um die Hochachse 16 drehbar. Das Stützelement 14 ist mit seinem Rahmen 20 in den Haltearmen 18 der Drei-Punkt-Aufhängung befestigt. Die Haltearme 18 sind über einen oder mehrere Hydraulikzylinder in ihrer Stellhöhe einstellbar, so daß sich bei einer Höhenverstellung der Haltearme 18 auch eine unterschiedliche Höheneinstellung des Rahmens 20 und des daran befestigten Stützelementes 14 ergibt. Das Stützelement 14 ist mit seinem Rahmen 20 räumlich so gestaltet, daß es in der obersten Position der Halterarme 18 einen Abstand zum Boden aufweist, jedoch etwa ab der mittleren Einstellhöhe der Haltearme 18 einen Bodenkontakt bekommt, wobei bei einer weiteren Verstellung der Haltearme 18 nach unten hin die Arbeitsmaschine 2 dadurch an ihrer Vorderseite angehoben wird, so daß die Vorderräder 10 dabei den Bodenkontakt verlieren. Zumindest im unteren Bereich des Verschwenkweges der Haltearme 18 befindet sich das Stützelement 14 deshalb in einer aktivierten Position, in der es Lenkkräfte auf den Boden übertragen kann.

Damit das Stützelement 14 bei einer Schwenkbewegung um die Hochachse 16 herum nicht mit den Vorderrädern 10 oder Karosseriebauteilen der Arbeitsmaschine 2 kollidiert, muß das Stützelement 14 in einem ausreichenden Abstand vor der Stirnseite der Arbeitsmaschine 2 angebracht werden. Um den Abstand von der Stirnseite der Arbeitsmaschine 2 zur Hochachse 16 zu überbrücken, ist an dem Rahmen 20 ein Stützbalken 22 befestigt, an dem das Stützelement 14 drehbeweglich angebracht.

Im Ausführungsbeispiel ist am Stützbalken 22 eine Drehplatte 24 befestigt, an die der Hydraulikzylinder 26 am Angriffspunkt 28 angreift. Da das eine Ende des Hydraulikzylinders 26 ortsfest am Rahmen 20 befestigt ist, ergibt sich bei einer Längenverstellung des Hydraulikzylinders 26 über den Angriffspunkt 28 eine Drehbewegung der Drehplatte 24 um die Hochachse 16 herum. Da der Querbalken 30 mit den seitlichen Pfosten 32 starr an der Drehplatte 24 befestigt ist, wird die Drehbewegung der Drehplatte 24 auf die am Pfosten 32 befestigte Radwalze 36 übertragen. Bei der Verstellung des Stützelementes 14 ergibt sich der in gestrichelten Linien angedeutete Drehradius 38 für das Stützelement 14. Anstelle der im Ausführungsbeispiel gezeigten Drehplatte 24 kann auch ein Drehzapfen, eine Kugellagerung oder dergleichen verwendet werden.

Um das Stützelement 14 in eine Fahrtrichtung F antreiben zu können, ist seitlich ein Motor 34 angebracht, durch den das Stützelement in eine rotierende Bewegung versetzt werden kann. Der Motor 34 kann als Elektro- oder Ölhydraulikmotor ausgestaltet sein. Solche Motoren verfügen bei einem vergleichsweise geringen Bauraum über eine hohe Leistungsdichte. Die Energieversorgung kann durch Schnelltrennkupplungen zur Elektrik und Hydraulik der Arbeitsmaschine 2 hergestellt werden.

Durch eine Verstellung des Hydraulikzylinders 26 kann das Stützelement 14 in einen beliebigen Schwenkwinkel verstellt werden. Im Ausführungsbeispiel ergibt sich bei einem vollständig eingefahrenen Hydraulikzylinder 26 eine Schwenkverstellung des Schutzelementes 14, bei dem dieses um etwa 90 Grad zur in Fig. 1 dargestellten Geradeausstellung verschwenkt ist. Mit dem Hydraulikzylinder 26 können stufenlos alle zwischen der Null-Lage und der 90 Grad-Lage liegenden Zwischenstellungen eingestellt werden. Je nach eingestelltem Lenkwinkel ergibt sich eine dem Lenkwinkel entsprechende Fahrtrichtung der Arbeitsmaschine 2, wenn sich das Stützelement 14 in seiner Betriebsstellung befindet und die gelenkten Vorderräder 10 keinen Bodenkontakt mehr haben.

Die Aufhängung des Stützelementes 14 an einer vorhandenen Drei-Punkt-Aufhängung an der Arbeitsmaschine 2 ist vorteilhaft, weil die Drei-Punkt-Aufhängung sehr häufig schon vorhanden ist und standarisierte Abmessungen aufweist. Dadurch ist das Stützelement 14 leicht an die Arbeitsmaschine 2 an- und abbaubar, und das Stützelement 14 kann austauschbar an verschiedenen Arbeitsmaschinen 2 nach Bedarf verwendet werden. Da vielfach Drei-Punkt-Aufhängungen auch an der hinteren Stirnseite einer Arbeitsmaschine 2 vorhanden sind, kann das Stützelement 14 insbesondere auch im heckseitigen Stirnbereich der Arbeitsmaschine 2 angebracht werden.

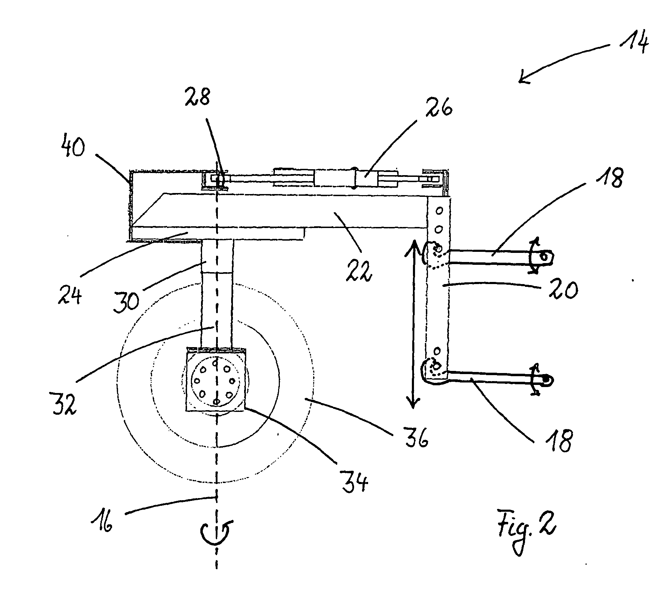

In der in Fig. 2 gezeigten Seitenansicht ist aus Vereinfachungsgründen nur das Stützelement 14 dargestellt, die Arbeitsmaschine 2 fehlt in der zeichnerischen Darstellung. Es ist in der Seitenansicht gut erkennbar, wie durch eine Schwenkbewegung der Haltearme 18 das Stützelement 14 in seiner Höhenlage verstellbar ist.

In der Darstellung in Fig. 2 wird der vom Hydraulikzylinder 26 erzeugte Lenkimpuls nicht direkt auf die Drehplatte 24 übertragen, sondern der Angriffspunkt 28 befindet sich an einem Lenkerarm 40, der den Drehimpuls auf die Drehplatte 24 überträgt.

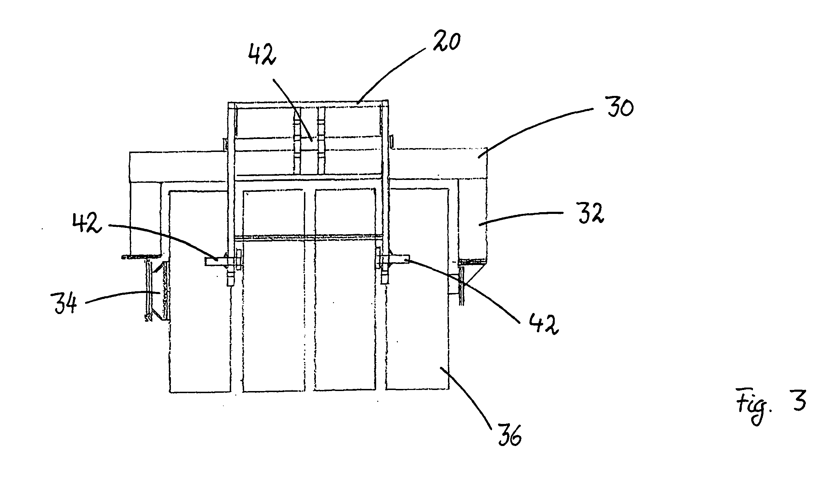

In Fig. 3 sind gut die Befestigungspunkte 42 erkennbar, an denen die Haltearme 18 der 3-Punkt-Aufhängung am Rahmen 20 angreifen.

Um einen Wendevorgang mit dem Stützelement 14 durchführen zu können, müssen die Funktionen Höhenverstellung des Stützelements 14, Einstellen eines gewünschten Schwenkwinkels des Stützelements 14 und die Einstellung einer passenden Geschwindigkeit des Antriebs des Stützelements 14 miteinander kombiniert werden. Bevorzugt sind die Funktionen über eine gemeinsame Bedienbox schaltbar, die in der Kabine 8 angebracht werden kann. Die Bedienbox kann dort dauerhaft eingebaut oder lösbar mit der Kabine 8 verbunden sein, um die Bedienbox mit dem Stützelement 14 nach dessen Demontage von einer Arbeitsmaschine 2 an einer anderen Arbeitsmaschine 2 anbringen zu können. Die genannten Funktionen können ganz oder teilweise in einer definierten Abhängigkeit voneinander schaltbar sein. So ist es möglich, den Antrieb nur in Betrieb zu nehmen, wenn das Stützelement auf eine Mindesthöhe abgesenkt wurde, oder die Höhenverstellung zunächst nur in einer Geradeausstellung des Stützelementes möglich ist und die Verstellung des Schwenkwinkels erst nach Erreichen einer Ziellage möglich ist.

Die Lenkung der Räder 10 der Arbeitsmaschine 2 und die Einstellung des Schwenkwinkels des Stützelements 14 können miteinander kombinierbar ausgestattet sein, um sicherzustellen, daß sich die jeweils übertragenen Lenkkräfte nicht gegenseitig vermindern oder aufheben. Die technische Umsetzung kann durch entsprechende Hydraulikschaltungen und/oder eine entsprechende Elektronik erfolgen, die eine gleichsinnige Orientierung der jeweiligen Lenkbewegungen sicherstellt.

Schließlich ergeben sich Bedienungsvereinfachungen, wenn die Abfolge bestimmter Funktionsschaltungen, wie beispielsweise die Einstellung bestimmter Stellwinkel bezüglich der Höhenlage und/oder der Drehwinkellage des Stützelements 14, und/oder bestimmter Bewegungsgeschwindigkeiten der Antriebe programmierbar, speicherbar und abrufbar sind.

Die vorstehende gegenständliche Beschreibung dient nur dem Zweck der Erläuterung des Erfindungsgegenstands und soll den Schutzumfang keinesfalls nur auf das erläuterte Ausführungsbeispiel begrenzen.

## Patentansprüche

1. Selbstfahrende Arbeitsmaschine (2) mit mindestens 4 Rädern (10,12), von denen mindestens 2 lenkbar sind, einem zusätzlichen in den Haltearmen (18) einer Drei-Punkt-Aufhängung befestigten in einer Fahrtrichtung (F) rotierend antreibbaren und um eine Hochachse (16) schwenkbeweglich stirnseitig gelagerten Stützelement (14), das so weit nach unten höhenverstellbar ist, daß zumindest zwei Räder (10, 12) vom Boden abgehoben werden können, und die Schwenklage des Stützelements (14) um die Hochachse (16) wahlweise einstellbar ist **dadurch gekennzeichnet, dass** sich das Stützelement 14 über mehr als die Hälfte der Breite der Arbeitsmaschine erstreckt, das Stützelement (14) über eine Drehplatte (24) mit einem Stützbalken (22) verbunden ist, der Stützbalken (22) den Abstand zwischen der Stirnseite der Arbeitsmaschine (2) und der Hochachse (16) überbrückt und der Stützbalken (22) über einen Rahmen (20) mit der Drei-Punkt-Aufhängung verbunden ist.

2. Arbeitsmaschine (2) nach Anspruch 1, **dadurch gekennzeichnet, daß** die Funktionen Höhenverstellung, Schwenkwinkelverstellung und rotierender Antrieb des Stützelementes (14) über eine gemeinsame Bedienbox schaltbar sind.

3. Arbeitsmaschine (2) nach Anspruch 1 oder 2, **dadurch gekennzeichnet, daß** die Funktionen Höhenverstellung, Schwenkwinkelverstellung und rotierender Antrieb des Stützelementes (14) ganz oder teilweise in einer definierten Abhängigkeit voneinander schaltbar sind.

4. Arbeitsmaschine (2) nach einem der vorhergehenden Ansprüche, **dadurch gekennzeichnet, daß** das Stützelement (14) lösbar an der 3-Punkt-Aufhängung (18) befestigbar ist.

5. Arbeitsmaschine (2) nach einem der vorhergehenden Ansprüche, **dadurch gekennzeichnet, daß** zur Höhenverstellung des Stützelementes (14) zumindest ein Hydraulikzylinder verwendbar ist.

6. Arbeitsmaschine (2) nach einem der vorhergehenden Ansprüche, **dadurch gekennzeichnet, daß** das Stützelement (14) mit einem elektrisch und oder hydraulisch angetriebenen Motor (34) rotierend antreibbar ist.

7. Arbeitsmaschine (2) nach einem der vorhergehenden Ansprüche, **dadurch gekennzeichnet, daß** die Lenkwinkelverstellung von zumindest 2 lenkbaren Rädern (10) der Arbeitsmaschine (2) und die Schwenkwinkelverstellung des Stützelementes (14) über eine elektronische und/oder hydraulische Brücke miteinander kombinierbar sind.

8. Arbeitsmaschine (2) nach einem der vorhergehenden Ansprüche, **dadurch gekennzeichnet, daß** die Abfolge bestimmter Funktionsschaltungen, bestimmte Stellwinkel und/oder bestimmte Bewegungsgeschwindigkeiten der Antriebe programmierbar sind.

9. Stützelement das in Fahrtrichtung (F) rotierend antreibbar und um eine Hochachse (16) wahlweise einstellbar schwenkbeweglich an einem Rahmen (20) befestigt ist, zum stirnseitigen Anbau an eine selbstfahrende Arbeitsmaschine, **dadurch gekennzeichnet, dass** das Stützelement (14) über eine Drehplatte (24) mit einem Stützbalken (22) verbunden ist, der Stützbalken (22) den Abstand zwischen der Stirnseite einer Arbeitsmaschine (2) und der Hochachse (16) überbrückt und der Stützbalken (22) über den Rahmen (20) mit den Haltearmen (18) einer Drei-Punkt-Aufhängung einer Arbeitsmaschine verbindbar ist wobei sich das Stützelement (14) über mehr als die Hälfte der Breite der verwendeten Arbeitsmaschine erstreckt.

10. Stützelement nach Anspruch 9, **gekennzeichnet durch** die kennzeichnenden Merkmale eines der Unteransprüche 2 bis 8.

## Claims

1. Self-propelled working machine (2) having at least four wheels (10, 12) of which at least two are steerable and having an additional support element (14) which is fastened in place in the hitching arms (18) of a three-point suspension, which can be driven in rotation in a direction of travel (F), which is mounted at an end-face to be movable by pivoting on a vertical axis (16), and which can be adjusted downwards vertically sufficiently far to enable at least two wheels (10,12) to be lifted off the ground, and the position to which the support element (14) is pivoted on the vertical axis (16) can be set as desired, **characterised in that** the support element (14) extends across more than half the width of the working machine, the support element (14) is connected to a supporting beam (22) by means of a rotary plate (24), the supporting beam (22) spans the distance between the end-face of the working machine (2) and the vertical axis (16), and the supporting beam (22) is connected to the three-point suspension by means of a frame (20).

2. Working machine (2) according to claim 1, **characterised in that** the functions of vertical adjustment of the support element (14), adjustment of its angle of pivot and rotary drive of it can be switched by means of a common control box.

3. Working machine (2) according to claim 1 or 2, **characterised in that** the functions of vertical adjustment of the support element (14), adjustment of its angle of pivot and rotary drive of it can be switched wholly or partly with a defined dependence on one another.

4. Working machine (2) according to one of the foregoing claims, **characterised in that** the support element (14) can be detachably fastened to the three-point suspension (18).

5. Working machine (2) according to one of the foregoing claims, **characterised in that** at least one hydraulic cylinder can be used for the vertical adjustment of the support element (14).

6. Working machine (2) according to one of the foregoing claims, **characterised in that** the support element (14) can be driven in rotation by an electrically and/or hydraulically driven motor (34).

7. Working machine (2) according to one of the foregoing claims, **characterised in that** the adjustment of the angle at which at least two steerable wheels (10) of the working machine (2) are steered and the adjustment of the angle of pivot of the support element (14) can be combined with one another by means of an electronic and/or hydraulic jumper means.

8. Working machine (2) according to one of the foregoing claims, **characterised in that** the sequence in which certain functions are switched to, certain positioned angles and/or certain speeds of movement of the drives can be programmed.

9. Support element which is fastened to a frame (20) in such a way as to be drivable in rotation in a direction of travel (F) and to be movable by pivoting on a vertical axis (16) in such a way as to be settable as desired, for mounting at an end-face of a self-propelled working machine, **characterised in that** the support element (14) is connected to a supporting beam (22) by means of a rotary plate (24), the supporting beam (22) spans the distance between the end-face of a working machine (2) and the vertical axis (16), and the supporting beam (22) can be connected to the hitching arms (18) of a three-point suspension of a working machine by means of the frame (20), the support element (14) extending across more than half the width of the working machine which is used.

10. Support element according to claim 9, **characterised by** the characterising features of one of the sub-claims 2 to 8.

## Revendications

1. Machine de travail automotrice (2) avec au moins 4 roues (10, 12), dont au moins 2 sont dirigeables, un élément de support supplémentaire (14) fixé dans les bras de maintien (18) d'une suspension à trois points, pouvant être entraîné en rotation dans une direction de déplacement (F) et monté côté frontal de manière à pouvoir se mouvoir par pivotement autour d'un axe vertical (16), élément qui est réglable en hauteur vers le bas à un point tel qu'au moins deux roues (10, 12) puissent être soulevées du sol, et la position de pivotement de l'élément de support (14) est réglable au choix autour de l'axe vertical (16), **caractérisée en ce que** l'élément de support (14) s'étend sur plus de la moitié de la largeur de la machine de travail, l'élément de support (14) est relié par une plaque tournante (24) à une poutre de support (22), la poutre de support (22) couvre la distance entre le côté frontal de la machine de travail (2) et l'axe vertical (16) et la poutre de support (22) est reliée à la suspension à trois points au moyen d'un châssis (20).

2. Machine de travail (2) selon la revendication 1, **caractérisée en ce que** les fonctions réglage en hauteur, réglage de l'angle de pivotement et entraînement tournant de l'élément de support (14) peuvent être enclenchées au moyen d'une boîte de commande commune.

3. Machine de travail (2) selon la revendication 1 ou 2, **caractérisée en ce que** les fonctions réglage en hauteur, réglage de l'angle de pivotement et entraînement tournant de l'élément de support (14) peuvent être enclenchées totalement ou partiellement en dépendance définie l'une de l'autre.

4. Machine de travail (2) selon l'une quelconque des revendications précédentes, **caractérisée en ce que** l'élément de support (14) peut être fixé de façon séparable à la suspension à trois points (18).

5. Machine de travail (2) selon l'une quelconque des revendications précédentes, **caractérisée en ce que** l'on peut utiliser au moins un vérin hydraulique pour le réglage en hauteur de l'élément de support (14).

6. Machine de travail (2) selon l'une quelconque des revendications précédentes, **caractérisée en ce que** l'élément de support (14) peut être entraîné en rotation avec un moteur (34) à entraînement électrique et/ou hydraulique.

7. Machine de travail (2) selon l'une quelconque des revendications précédentes, **caractérisée en ce que** le réglage de l'angle de direction d'au moins 2 roues dirigeables (10) de la machine de travail (2) et le réglage de l'angle de pivotement de l'élément de support (14) peuvent être combinés l'un avec l'autre au moyen d'un pont électronique et/ou hydraulique.

8. Machine de travail (2) selon l'une quelconque des revendications précédentes, **caractérisée en ce que** la succession d'enclenchements de fonctions déterminés, des angles de réglage déterminés ou des vitesses de déplacement déterminées des entraînements peut être programmée.

9. Élément de support, qui peut être entraîné en rotation dans la direction de déplacement (F) et qui est fixé à un châssis (20) de façon réglable au choix en mouvement de pivotement autour d'un axe vertical (16), à monter côté frontal sur une machine de travail automotrice, **caractérisé en ce que** l'élément de support (14) est relié par une plaque tournante (24) à une poutre de support (22), la poutre de support (22) couvre la distance entre le côté frontal d'une machine de travail (2) et l'axe vertical (16), et la poutre de support (22) peut être reliée au moyen du châssis (20) aux bras de maintien (18) d'une suspension à trois points d'une machine de travail, dans lequel l'élément de support (14) s'étend sur plus de la moitié de la largeur de la machine de travail utilisée.

10. Élément de support selon la revendication 9, **caractérisé par** les caractéristiques caractérisantes d'une des revendications dépendantes 2 à 8.
